# EUROPEAN PATENT SPECIFICATION

(11) **EP 0 966 495 B1**
(45) Date of publication and mention of the grant of the patent: **03.07.2002**
(21) Application number: 98910687.7
(22) Date of filing: 17.02.1998
(51) Int. Cl.: C08G 18/10, C08G 18/48

(54) **METHOD FOR THE PREPARATION OF POLYURETHANE ELASTOMERS**
METHODE ZUR HERSTELLUNG VON POLYURETHAN-ELASTOMEREN
PROCEDE DE PREPARATION D'ELASTOMERES DE POLYURETHANNE

(30) Priority: 14.03.1997 EP 97104386
(43) Date of publication of application: 29.12.1999
(73) Proprietor: HUNTSMAN INTERNATIONAL LLC, Salt Lake City, Utah 84108 (US)
(72) Inventor: BLEYS, Gerhard, Jozef, B-3001 Heverlee (BE); HAMILTON, Alan, James, B-3061 Leefdaal (BE); CASSIDY, Edward, Francis, Dryden, MI 48428 (US)
(74) Representative: Moens, Marnix Karel Christiane
(86) International application number: EP9800887
(87) International publication number: WO9841553

(56) References cited:
- EP-A- 0 541 390
- GB-A- 893 273
- US-A- 4 158 087
- US-A- 4 367 259
- DATABASE WPI Week 8244 Derwent Publications Ltd., London, GB; AN 82-93756e XP002042366 & JP 57 155 224 A (TOYO RUBBER CHEM. IND. CO.) , 25 September 1982

## Description

This invention relates to a method for the preparation of polyurethane elastomers and elastomers thus obtained.

Elastomers made from polyisocyanate-based polymers are known. Generally, they are made by reacting diisocyanates with high and optionally low molecular weight isocyanate-reactive compounds having a functionality of about 2. Processing of such elastomers can be accomplished by various methods, e.g. casting, moulding or (for elastomers having thermoplastic properties) thermoplastic techniques such as injection molding, extrusion and calendering.

Compression moulding is a known processing technique for rubbers and can be used for vulcanisable polyurethane materials such as the so-called 'millable gums'.

The use of aqueous latices in combination with polyurethane forming materials for preparing PU foams is also known. For example, in US-A 4,158,087 a hydrophylic prepolymer is reacted with water and a synthetic polymer latex to produce flexible hydrophylic PU foams and US-A 5,312,847 discloses polyurethane, especially flexible, foams prepared by reacting a polyisocyanate with a polyahl in the presence of a blowing agent and a certain particulate organic polymer which is preferably introduced by way of an aqueous latex.

Hydrophylic isocyanate-prepolymers are known and have been used in the production of flexible foams, see e.g. WO94/29361.

In US-A 5,571,529 polyurethane foams for use in wound dressings are made by mixing a hydrophylic isocyanate-capped prepolymer with water in the presence of a monohydric alcohol and drying the product. Small amounts of a rubber, preferably an acrylic-based rubber in the form of a latex, may be added to the reaction mixture.

It has now surprisingly been found that elastomers having valuable properties can successfully be produced by compression moulding certain flexible polyurethane foams.

The invention thus concerns a method for the production of polyurethane elastomers by reacting an isocyanate prepolymer having an isocyanate content of from 5 to 10% by weight which is the reaction product of an excessive amount of a polyisocyanate containing at least 85% by weight of 4,4'-diphenylmethane diisocyanate or a variant thereof, which is a liquid product obtained by introducing uretonimine and/or carbodiimide groups into said polyisocyanate composition and/or by reacting such a composition with one or more polyols, and a polyether polyol having an average nominal hydroxyl functionality of from 2 to 4, an average hydroxyl equivalent weight of from 500 to 3000, and an oxyethylene content of from 50 to 85% by weight, with an aqueous latex to form a foam wherein no additives are used except up to 5 parts by weight of foam stabilizer per 100 parts by weight of isocyanate prepolymer, and compressing said foam at a pressure between 50 and 200 bar at a temperature between 100 and 250°C.

The term "average nominal hydroxyl functionality" is used herein to indicate the average functionality (number of hydroxyl groups per molecule) of the polyether polyols on the assumption that the average functionality of the polyether polyols is identical with the average functionality (number of active hydrogen atoms per molecule) of the initiator(s) used in their preparation although in practice it will often be somewhat less because of some terminal unsaturation.

The polyisocyanate used in the preparation of the isocyanate prepolymer preferably contains 90 and more preferably 95% by weight of 4,4'-diphenyl-methane diisocyanate. It may consist essentially of pure 4,4'-diphenylmethane diisocyanate or mixtures of that diisocyanate with one or more other organic polyisocyanates, especially other diphenylmethane diisocyanate isomers, for example the 2,4'-isomers optionally in conjunction with the 2,2'-isomer. The polyisocyanate may also be an diphenylmethane diisocyanate (MDI) variant derived from a polyisocyanate composition containing at least 85% by weight of 4,4'-diphenylmethane diisocyanate. MDI variants are well known in the art and, for use in accordance with the invention, are liquid products obtained by introducing uretonimine and/or carbodiimide groups into said polyisocyanate composition and/or by reacting such a composition with on or more polyols. Preferably, the polyisocyanate has a functionality of 2.05 or less and most preferably of 2.00 and most preferably is 4,4'-MDI.

Polyether polyols used in the preparation of the isocyanate prepolymers are preferably poly(oxyethylene-oxypropylene) polyols having the required average nominal hydroxyl functionality, average hydroxyl equivalent weight and oxyethylene content.

Suitable polyether polyols may be obtained in conventional manner by reacting ethylene and propylene oxides simultaneously and/or sequentially in any order with an initiator such as water, a polyol, a hydroxylamine, a polyamine and the like having from 2 to 6 active hydrogen atoms or mixtures of such initiators.

In order to obtain an average nominal hydroxyl functionality of from 2 to 4 a polyether polyol having an average nominal hydroxyl functionality may be used or a mixture of polyether polyols having an average nominal hydroxyl functionality of from 2 to 6 provided the mixture is in the above 2 to 4 average nominal hydroxyl functionality range.

If desired, the polyether polyol (or one or more of the polyether polyols when a mixture of such is used) may contain dispersed polymer particles. Such polymer-modified polyols have been fully described in the prior art and include products obtained by the in situ polymerisation of one or more vinyl monomers, for example acrylonitrile and styrene, in polyether polyols or by the in situ reaction between a polyisocyanate and an amino- or hydroxy-functional compound, for example triethanolamine, in the polyether polyol.

Preferred polyether polyols have a nominal hydroxyl functionality of from 2 to 3 and an average hydroxyl equivalent weight from 1000 to 2000. It is most preferred that the polyether polyols have a nominal hydroxyl functionality of 2 and an average hydroxyl equivalent weight from 1200 to 1600. The oxyethylene content is preferably from 60 to 80% by weight.

The isocyanate prepolymers are conventionally prepared by reacting the polyisocyanates and the polyether polyols at relative amounts so as to obtain an isocyanate content of 5 to 10% by weight at a temperature preferably between 40 and 80EC. The prepolymers so prepared are liquid at ambient conditions. To the prepolymers so prepared low amounts (up to 30% by weight) of MDI or a variant thereof may be added provided the 4,4'-MDI content remains above 85% by weight calculated on all polyisocyanate used and provided the average isocyanate functionality of the added polyisocyanate is less than 2.2.

The prepolymer preferably has a viscosity of at most 10.000 mPa.s at 25°C.

At least 20 parts by weight of the aqueous latex is reacted with 100 parts by weight of the isocyanate prepolymer. It is preferred to react 20-500, and more preferably 75-150, parts by weight of aqueous latex with 100 parts by weight of the isocyanate prepolymer.

Suitable aqueous latices include aqueous latices of natural rubber, isoprene rubber, neoprene rubber, polybutadiene rubber, styrene-butadiene rubber (SBR), nitrile rubber (NBR), isobutylene-isoprene rubber (IIR), copolymers of acrylonitrile, methacrylonitrile, acrylates, methacrylates, vinylpyridine with butadiene or 2-chloro-1,3-butadiene and chlorinated polyethylene or mixtures of any of these.

Preferred are aqueous latices of natural rubber, styrene-butadiene rubber, polybutadiene rubber, isoprene rubber or copolymers comprising acrylates.

The solids content of suitable aqueous latices is from 20 to 70 % by weight. Preferred latices have a solids content of from 30 to 60 % by weight.

In addition to the isocyanate prepolymer and the aqueous latex the formulations may further comprise additives commonly used in the manufacture of elastomers. Such additives include catalysts, organic or inorganic fillers, pigments, desiccants, foam stabilisers, chain extenders, cross-linking agents, internal mould release agents, surface-active agents and flame retardants. The choice of such additives and the amounts used will depend on the desired properties of the end product. If used, such additives preferably are pre-mixed with the aqueous latex. Valuable elastomers may however be obtained without any of these additives.

No additives are used except up to 5 parts by weight per 100 parts by weight of the isocyanate prepolymer of foam stabilizer. Most preferably no additives are employed.

It is preferred to dry the foams before compressing them.

The compression is carried out in a conventional compression mould at a pressure between 50 and 200 bar at a temperature between 100 and 250 °C. The compression time depends on the temperature and the required geometry of the part.

The elastomers so obtained generally have an average density of from 200 to 1200 kg/m3, preferably from 300 to 1000 kg/m3, and most preferably from 400 to 700 kg/m3.

The elastomers of the present invention are useful in a wide variety of applications, such as footwear, acoustical insulation, vibration damping or carpet backing.

The following examples illustrate, but do not limit the invention. All ratios are weight ratios, unless stated otherwise.

### Examples 1-3

Elastomers were obtained by compression moulding foams which were made by blending an isocyanate-prepolymer and a latex in different ratios as indicated in the Table. The isocyanate-prepolymer and the latex were mixed in a conventional manner in a low pressure PU dispensing machine. The temperature of the isocyanate-prepolymer was 45°C and that of the latex was 20° C. The foams obtained were dried in an oven at 80° C until no further weight loss occurred and compressed at 150° C in a hydraulic press under a pressure of 100 bars on the spacers.

The properties that were measured and the results obtained are shown in the Table.

**Table**

| | Ex. 1 | Ex. 2 | Ex. 3 | Comp. Ex 1 |
|---|---|---|---|---|
| Prepolymer 1 | 1 | 1 | 0.5 | - |
| Prepolymer 2 | - | - | - | 1 |
| Latex | 0.5 | 1 | 1 | 1 |
| Free rise density (kg/m3) | 84 | 104 | 125 | (*) |
| Compression moulded density (kg/m3) | 530 | 650 | 550 | |
| Asker C hardness (ASTM D2240) | 62 | 60 | 55 | |
| Tensile strength (MPa) (DIN 53571) | 1.5 | 1.0 | 0.4 | |
| Elongation at break (%) (DIN 53571) | 300 | 390 | 300 | |

| | | | | |
|---|---|---|---|---|
| (*) : no foam resulted Prepolymer 1: 'Suprasec' 1002 (commercially available from ICI: Suprasec is a trade mark of Imperial Chemical Industries Ltd.) Prepolymer 2: 4,4'-MDI/polyether polyol (fn=3,OHv=28,14% EO-tip) reaction product (weight ratio 75/25) Latex: water-based acrylic latex paint (colour black: estimated water-content : 60 % by weight) | | | | |

The moulded parts made from the elastomers according to the invention showed a very high definition and a 'rubber-like' touch whilst no foam could be made from the comparative formulation.

## Claims

1. A method for the production of polyurethane elastomers by reacting an isocyanate prepolymer having an isocyanate content of from 5 to 10% by weight which is the reaction product of an excessive amount of a polyisocyanate containing at least 85% by weight of 4,4'-diphenylmethane diisocyanate or a variant thereof, which is a liquid product obtained by introducing uretonimine and/or carbodiimide groups into said polyisocyanate composition and/or by reacting such a composition with one or more polyols, and a polyether polyol having an average nominal hydroxyl functionality of from 2 to 4, an average hydroxyl equivalent weight of from 500 to 3000, and an oxyethylene content of from 50 to 85% by weight, with an aqueous latex to form a foam wherein no additives are used except up to 5 parts by weight of foam stabilizer per 100 parts by weight of isocyanate prepolymer, and compressing said foam at a pressure between 50 and 200 bar at a temperature between 100 and 250°C.

2. A method according to claim 1 wherein the polyether polyol is a poly(oxyethylene-oxypropylene) polyol.

3. A method according to claim 1 or 2 wherein the polyether polyol has a nominal hydroxyl functionality of from 2 to 3 and an average hydroxyl equivalent weight of from 1000 to 2000.

4. A method according to claim 3 wherein the polyether polyol has a nominal hydroxyl functionality of from 2 to 3 an average hydroxyl equivalent weight of from 1200 to 1600.

5. A method according to any of the preceding claims wherein the polyether polyol has an oxyethylene content of from 60 to 80% by weight.

6. A method according to any of the preceding claims wherein the polyisocyanate contains at least 90% by weight of 4,4'-diphenylmethane diisocyanate.

7. A method according to claim 6 wherein the polyisocyanate contains at least 95% by weight of 4,4'-diphenylmethane diisocyanate.

8. A method according to any of the preceding claims wherein the solids content of the aqueous latex is from 30 to 60% by weight.

9. A method according to claim 8 wherein the aqueous latex is selected from the group consisting of aqueous latices of natural rubber, styrene-butadiene rubber, polybutadiene rubber, isoprene rubber and copolymers comprising acrylates.

10. A method according to any of the preceding claims wherein 20-500 parts by weight of aqueous latex is reacted with 100 parts by weight of the isocyanate prepolymer.

11. A method according to claim 10 wherein 75-150 parts by weight of aqueous latex is reacted with 100 parts by weight of the isocyanate prepolymer.

12. A method according to any of the preceding claims wherein the foam is dried before being compressed.

13. An elastomer obtained by the method according to any of the preceding claims having an average density of from 300 to 1000 kg/m3.

14. An elastomer obtained by the method according to claim 12 having a density of from 400 to 700 kg/m3.

## Patentansprüche

1. Verfahren zur Herstellung von Polyurethanelastomeren durch Reaktion eines Isocyanat-Vorpolymers mit einem Isocyanatgehalt von 5 bis 10 Masseprozent, welches das Reaktionsprodukt eines überschüssigen Anteils eines Polyisocyanats ist, welches wenigstens 85 Masseprozent 4,4'-Diphenylmethandiisocyanat oder eine Variante davon enthält, welches ein flüssiges Produkt ist, erhalten durch die Einführung von Uretonimin- und/oder Carbodiimidgruppen in die Polyisocyanatzusammensetzung und/oder durch Reaktion einer derartigen Zusammensetzung mit einem oder mehreren Polyolen und einem Polyetherpolyol mit einer mittleren nominalen Hydroxylfunktionalität von 2 bis 4, einer mittleren Hydroxyläquivalentmasse von 500 bis 3000, und einem Oxyethylengehalt von 50 bis 85 Masseprozent, mit einem wässrigen Latex, um ein Schaumstoff zu bilden, in dem keine Zusätze verwendet werden, außer bis zu 5 Masseteilen eines Schaumstabilisators auf 100 Masseteile vom Isocyanat-Vorpolymer, und Kompression des Schaumstoffs mit einem Druck zwischen 50 und 200 Bar, bei einer Temperatur zwischen 100 und 250°C.

2. Verfahren nach Anspruch 1, wobei das Polyetherpolyol ein Poly(oxyethylen-oxypropylen)polyol ist.

3. Verfahren nach Anspruch 1 oder 2, wobei das Polyetherpolyol eine nominale Hydroxylfunktionalität von 2 bis 3 und eine mittlere Hydroxyläquivalentmasse von 1000 bis 2000 hat.

4. Verfahren nach Anspruch 3, wobei das Polyetherpolyol eine nominale Hydroxylfunktionalität von 2 bis 3 und eine mittlere Hydroxyläquivalentmasse von 1200 bis 1600 hat.

5. Verfahren nach einem der vorhergehenden Ansprüche, wobei das Polyetherpolyol einen Oxyethylengehalt von 60 bis 80 Masseprozent hat.

6. Verfahren nach einem der vorhergehenden Ansprüche, wobei das Polyisocyanat wenigstens 90 Masseprozent 4,4'-Diphenylmethandiisocyanat enthält.

7. Verfahren nach Anspruch 6, wobei das Polyisocyanat wenigstens 95 Masseprozent 4,4'-Diphenylmethandiisocyanat enthält.

8. Verfahren nach einem der vorhergehenden Ansprüche, wobei der Gehalt der festen Bestandteile des wässrigen Latex 30 bis 60 Masseprozent beträgt.

9. Verfahren nach Anspruch 8, wobei der wässrige Latex aus der Gruppe bestehend aus wässrigen Latizes aus Naturkautschuk, Styrol-Butadien-Kautschuk, Polybutadienkautschuk, Isoprenkautschuk und Copolymeren, die Acrylate enthalten, ausgewählt wird.

10. Verfahren nach einem der vorhergehenden Ansprüche, wobei 20-500 Masseteile wässriger Latex mit 100 Masseteilen Isocyanat-Vorpolymer reagieren.

11. Verfahren nach Anspruch 10, wobei 75-150 Masseteile wässriger Latex mit 100 Masseteilen Isocyanat-Vorpolymer reagieren.

12. Verfahren nach einem der vorhergehenden Ansprüche, wobei der Schaumstoff vor der Kompression getrocknet wird.

13. Elastomer erhalten durch das Verfahren nach einem der vorhergehenden Ansprüche mit einer mittleren Dichte von 300 bis 1000 kg/m³.

14. Elastomer erhalten durch das Verfahren nach Anspruch 12 mit einer Dichte von 400 bis 700 kg/m³.

## Revendications

1. Procédé pour la production d'élastomères de polyuréthanne en faisant réagir un prépolymère d'isocyanate ayant une teneur en isocyanate de 5 à 10 % en poids qui est le produit de réaction d'un excès d'un polyisocyanate contenant au moins 85 % en poids de 4,4'-diphénylméthane-diisocyanate ou d'un de ses variants, qui est un produit liquide obtenu en introduisant des groupes urétonimine et/ou carbodiimide dans ladite composition de polyisocyanate et/ou en faisant réagir une telle composition avec un ou plusieurs polyols, et d'un polyéther-polyol ayant une fonctionnalité hydroxyle nominale moyenne de 2 à 4, un poids équivalent d'hydroxyle moyen de 500 à 3000 et une teneur en oxyéthylène de 50 à 85 % en poids, avec un latex aqueux pour former une mousse dans laquelle aucun additif n'est utilisé à l'exception d'une quantité allant jusqu'à 5 parties en poids d'un stabilisant de mousse pour 100 parties en poids de prépolymère d'isocyanate, et en comprimant ladite mousse à une pression comprise dans l'intervalle de 50 à 200 bars à une température comprise dans l'intervalle de 100 à 250°C.

2. Procédé suivant la revendication 1, dans lequel le polyéther-polyol est un poly(oxyéthylène-oxypropylène)-polyol.

3. Procédé suivant la revendication 1 ou 2, dans lequel le polyéther-polyol a une fonctionnalité hydroxyle nominale de 2 à 3 et un poids équivalent d'hydroxyle moyen de 1000 à 2000.

4. Procédé suivant la revendication 3, dans lequel le polyéther-polyol a une fonctionnalité hydroxyle nominale de 2 à 3 et un poids équivalent d'hydroxyle moyen de 1200 à 1600.

5. Procédé suivant l'une quelconque des revendications précédentes, dans lequel le polyéther-polyol a une teneur en oxyéthylène de 60 à 80 % en poids.

6. Procédé suivant l'une quelconque des revendications précédentes, dans lequel le polyisocyanate contient au moins 90 % en poids de 4,4'-diphénylméthane-diisocyanate.

7. Procédé suivant la revendication 6, dans lequel le polyisocyanate contient au moins 95 % en poids de 4,4'-diphénylméthane-diisocyanate.

8. Procédé suivant l'une quelconque des revendications précédentes, dans lequel la teneur en matières solides du latex aqueux est comprise dans l'intervalle de 30 à 60 % en poids.

9. Procédé suivant la revendication 8, dans lequel le latex aqueux est choisi dans le groupe consistant en des latex aqueux de caoutchouc naturel, de caoutchouc styrène-butadiène, de caoutchouc polybutadiène, de caoutchouc isoprène et de copolymères comprenant des acrylates.

10. Procédé suivant l'une quelconque des revendications précédentes, dans lequel une quantité de 20 à 500 parties en poids de latex aqueux est amenée à réagir avec 100 parties en poids du prépolymère d'isocyanate.

11. Procédé suivant la revendication 10, dans lequel une quantité de 75 à 150 parties en poids du latex aqueux est amenée à réagir avec 100 parties en poids du prépolymère d'isocyanate.

12. Procédé suivant l'une quelconque des revendications précédentes, dans lequel la mousse est séchée avant d'être comprimée.

13. Elastomère obtenu par le procédé suivant l'une quelconque des revendications précédentes, ayant une masse volumique moyenne de 300 à 1000 kg/m³.

14. Elastomère obtenu par le procédé suivant la revendication 12, ayant une masse volumique de 400 à 700 kg/m³.
